# EUROPÄISCHE PATENTSCHRIFT

(11) **EP 0 463 420 B1**
(45) Veröffentlichungstag und Bekanntmachung des Hinweises auf die Patenterteilung: **19.04.1995**
(21) Anmeldenummer: 91109217.9
(22) Anmeldetag: 06.06.1991
(51) Int. Cl.: B29C 33/62, B29C 33/64, B29K 29/00

(54) **Wässriges Trennmittel zur Herstellung von Polyurethan-Formkörpern enthaltend Polyvinylalkohol**
Waterborne release agent, containing polyvinyl alcohol, for manufacturing of moulded polyurethane
Agent de démoulage sur la base aqueuse, contenant de l'alcool polyvinylique, pour la fabrication de polyuréthane moulé

(30) Priorität: 23.06.1990 DE 4020038
(43) Veröffentlichungstag der Anmeldung: 02.01.1992
(73) Patentinhaber: KLÜBER CHEMIE KG, D-82212 Maisach (DE)
(72) Erfinder: Gebhardt, Manfred, W-6430 Bad Hersfeld (DE); Beranek, Jiri, W-8872 Burgau (DE); Knöchel, Friedrich, Dr., W-8031 Alling (DE)
(74) Vertreter: Steffens, Joachim, Dr.

(56) Entgegenhaltungen:
- EP-A- 0 320 833
- DE-A- 2 057 554
- JAPANESE PATENTS GAZETTE Section Ch, Week C42, 26. November 1980 Derwent Publications Ltd., London, GB; Class A, Page 4, AN 74256C/42

## Beschreibung

Bei der Herstellung von Formkörpern aus polymeren Werkstoffen sind in den meisten Fällen wirksame Trennmittel erforderlich, um die Oberfläche der Formkörper von den Wandungen der als Werkzeug verwendeten Form zu lösen.

Die adhäsiven Eigenschaften der meisten Kunststoffe gegenüber anderen Materialien sind bekannt. Eine besondere Rolle dabei spielen die Polyurethane, deren klebende Eigenschaften den Einsatz besonderer Trennmittel verlangen, die insbesondere unter den Bedingungen spezieller Formteilfertigung eine große Anzahl konturenscharfer Entformungen ermöglichen. Trennmittel für Schaumstoffteile, die auf der Diisocyanat-Polyadditionsreaktion basieren, sollen eine geringe Neigung zur Ablagerung in der Form zeigen. Meist werden für solche Zwecke Trennmittel auf Wachs-, Seifen- und/oder Ölbasis mit Druckluft in die geöffnete Form gesprüht, wobei es auf einen gleichmäßigen Trennmittelauftrag ankommt. Dieser Vorgang muß nach jeder Entformung wiederholt werden.

Im Gegensatz zu früher, als man ausschließlich mit lösungsmittelhaltigen Trennmittelsystemen arbeitete, versucht man jetzt im Rahmen ökologischen Umdenkens Trennmittel auf wässriger Basis einzusetzen. Beispielsweise gelangen heute hierfür solche wässrigen Trennmittel zum Einsatz, die als trennende Komponente höhermolekulare Kohlenwasserstoffe enthalten. Hierfür stehen wässrige Emulsionen von Paraffinen oder wässrigen Dispersionen von Polyethylenwachsen oder wässrige Emulsionen von Polyölen, d.h. ungesättigte oligomere oder polymere Kohlenwasserstoffe zur Verfügung.

Grundsätzlich hat es sich jedoch bei der Anwendung dieser wässrigen Trennmittel als noch nicht befriedigend erwiesen, insbesondere bei der Anwendung in Verbindung mit der Herstellung von Polyurethan-Weichschaumstoffen, daß die Oberflächen der entformten Teile nicht immer den gestellten Anforderungen entsprechen.

Ein weiterer Nachteil ist der starke Trennmittelaufbau (Ablagerungen) in den Werkstofformen, so daß selbst kurze Formenreinigungszyklen einen erheblichen technologischen Mehraufwand bedeuten.

Aufgabe der vorliegenden Erfindung ist es daher, ein wässriges Trennmittel zur Herstellung von Polyurethan-Formkörpern, insbesondere von Polyurethan-Schaumformkörpern, zur Verfügung zu stellen, mit dem die Eigenschaften der Oberflächen der Polyurethan-Formkörper verbessert werden.

Damit steht eng im Zusammenhang eine verbesserte Trennwirkung der erfindungsgemäßen wässrigen Emulsion, die selbst dann noch zum Tragen kommt, wenn einmal vergessen wurde, die Formenwandungen nach der Entformung einzusprühen. In dieser Hinsicht war es zusätzlich Aufgabe der vorliegenden Erfindung, durch ein besseres "Aufschmelzen" der trennwirksamen Substanzen einen homogenen Trennmittelfilm in den beheizten Formen zu erzielen, um die ungestörte Wirksamkeit des Schaumstabilisators im Grenzflächenbereich Trennmittel-Schaumstoffoberfläche zu garantieren.

Eine weitere wichtige Aufgabe der vorliegenden Erfindung besteht darin, mit dem wässrigen Trennmittel eine Barrierewirkung gegenüber der Isocyanat-Wasser-Reaktion zu erzielen, dergestalt, daß die Bildungsreaktion von assoziiertem, festen Polyharnstoff so beeinflußt wird, daß daraus einerseits ein geringer Formenverschmutzungsgrad mit geringem technologischen Reinigungsaufwand resultiert und andererseits der Versprödungsgrad der Polyharnstoffschichten minimiert wird, so daß thermisch bedingte Schrumfspannungen trotzdem eine homogene, elastische Trennmittelschicht gewährleisten.

Gelöst wird diese Aufgabe gemäß der vorliegenden Erfindung durch ein wässriges Trennmittel, das die trennwirksamen Substanzen in Kombination mit einem oder mehreren ganz oder teilverseiften Polyvinylacetaten enthält. Vorzugsweise handelt es sich bei den ganz- oder teilverseiften Polyvinylacetaten um statistische Polyvinylalkohole der allgemeinen Formel

-AABABABBBABAABABBABAABBB-

in der 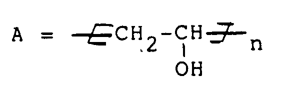
und n = 350 bis 2600
und 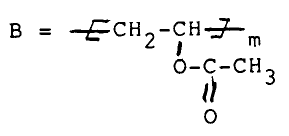
und m = 29 bis 149
bedeuten.

Das erfindungsgemäße wässrige Trennmittel enthält den Polyvinylalkohol oder deren Gemische ein einer Menge von 0,1 bis 5 Gew.-%, vorzugsweise in einer Menge von 0,8 bis 3 Gew.-%, bezogen auf das Gesamtgewicht des Trennmittels.

Zu den bevorzugt eingesetzten teilverseiften Polyvinylalkoholen oder Gemischen davon gehören solche, die einen Verseifungsgrad von 71,6 bis 87,7 Mol.-% aufweisen.

Gemäß der vorliegenden Erfindung besteht die trennwirksame Substanz vorzugsweise zumindest zum Teil aus einem oder mehreren ungesättigten oligomeren oder polymeren Kohlenwasserstoffen, gegebenenfalls in Kombination mit für Polyurethan-Systeme geeigneten Schaumstabilisatoren, wobei die ungesättigten oligomeren oder polymeren Kohlenwasserstoffe ein Molekulargewicht von mindestens 500, vorzugsweise von 1.000 bis 10.000, insbesondere von 2.500 bis 6.000, und Jodzahlen von mindestens 60, vorzugsweise von 150 bis 600, aufweisen.

Die in der erfindungsgemäßen Kombination vorzugsweise eingesetzten ungesättigten Kohlenwasserstoffe können Homo- oder Copolymerisate bzw. Blockcopolymerisate sein und sind vorzugsweise bei Raumtemperatur und unter den Verarbeitungsbedingungen flüssig oder fließfähig. Sie enthalten vorzugsweise die Doppelbindungen nicht in konjugierter Form, so daß zu den erfindungsgemäß besonders bevorzugten ungesättigten Kohlenwasserstoffen solche gehören, die Oligomere oder Polymere von Isopren und/oder Butadien sind und die gegebenenfalls noch mit anderen damit polymerisierbaren Monomeren copolymerisiert oder blockcopolymerisiert sein können. Sie können außerdem zusätzlich noch funktionelle Gruppen, insbesondere Sauerstoff und/oder Stickstoff enthaltende Gruppen sowie solche Gruppen aufweisen, die nach Zerewitinoff aktive Wasserstoffatome enthalten.

Ein erfindungsgemäß besonders bevorzugt eingesetzter ungesättigter Kohlenwasserstoff ist ein flüssiges Polybutadien, in den Beispielen mit "UKW-Liquid" bezeichnet, das ein Molekulargewicht von ca. 3.000 und eine Jodzahl von ca. 450 aufweist.

Das erfindungsgemäße wässrige Trennmittel enthält die ungesättigten Kohlenwasserstoffe in einer Menge von 0,5 bis 50 Gew.-%, insbesondere in einer Menge von 1 bis 40 Gew.-%, insbesondere in einer Menge von 2 bis 10 Gew.-%, bezogen auf das Gesamtgewicht des Trennmittels. Die für das jeweilige Polyurethan-System am besten geeigneten Mengen an ungesättigten Kohlenwaserstoffen werden in der üblichen Weise, die dem Fachmann geläufig ist, experimentell ermittelt.

Das erfindungsgemäße wässrige Trennmittel kann aber auch als wirksame Substanz zumindest zum Teil ein für diese Zwecke übliches Siliconöl, vorzugsweise ein gegebenenfalls mit aliphatischen und/oder aromatischen Kohlenwasserstoffresten substituiertes Polydimethylsilicon und/oder zumindest zum Teil für diese Zwecke übliche Fette und/oder Öle und/oder zumindest zum Teil ein für diese Zwecke übliches flüssiges oder festes natürliches oder synthetisches Wachs enthalten.

Als Emulgatoren werden die üblichen Emulgatoren in den üblichen Mengen eingesetzt.

Als Schaumstabilisatoren werden die für die jeweiligen Polyurethanschaumstoff-Systeme üblichen Schaumstabilisatoren eingesetzt. Zu den erfindungsgemäß bevorzugt eingesetzten Schaumstabilisatoren gehören Polysiloxan-Polyether-Copolymerisate unterschiedlichen Aufbaus, wie sie beispielsweise im Kunststoff-Handbuch "Polyurethane" Becker/Braun, Hanser-Verlag/München und in den US-PSen 28 34 748, 29 17 480, 36 29 308 sowie in den DE-OS 25 58 523 beschrieben sind. Die Schaumstabilisatoren werden vorzugsweise in einer Menge von 0,2 bis 6 Gew.-%, insbesondere von 0,5 bis 3 Gew.-%, bezogen auf das Gesamtgewicht des Trennmittels, eingesetzt.

Im übrigen können die erfindungsgemäßen wässrigen Trennmittel in Trennmitteln gebräuchliche Zusätze enthalten, wie z. B. Biozide, Aminverbindungen, quaternäre Ammoniumverbindungen, oberflächenmodifizierende Substanzen (Bentonite) u.a.

Die nachfolgenden Beispiele erläutern die Erfindung ohne sie jedoch darauf einzuschränken.

### Beispiel 1

Ein wässriges Trennmittel, das bei der Herstellung von Polyurethan-Weichschaumformkörpern Anwendung findet, hat folgende Zusammensetzung:
20 Gew.-% UKW-Liquid (siehe Beschreibung Seite 8, Abs. 1)
3 Gew.-% Polyvinylalkohol (M = 84000, n = 1720, m = 96)
4 Gew.-% Emulgator: Mulsifan RT 231 = Kombination von Alkylaryl- und Alkylpolyglykolethern (Handelsprodukt der Fa. Zschimmer & Schwarz)
2 Gew.-% Schaumstabilisator DC-190 (Handelsprodukt der Firma Dow Corning)
71 Gew.-% Wasser

### Beispiel 2

Ein weiteres wässriges Trennmittel, das bei der Herstellung von Polyurethan-Hartschaumformkörpern Anwendung findet, hat folgende Zusammensetzung:
70 Gew.-% Wasser
10 Gew.-% UKW-Liquid (siehe Beschreibung Seite 8, Abs. 1)
10 Gew.-% Mikrowachs (F: 70°C)
4 Gew.-% Polyvinylalkohol (M = 84000, n = 1720, m = 96)
4 Gew.-% Emulgator: Mulsifan RT 231 = Kombination von Alkylaryl- und Alkylpolyglykolethern (Handelsprodukt der Fa. Zschimmer & Schwarz)
2 Gew.-% Schaumstabilisator DC-190 (Handelsprodukt der Fa. Dow Corning)

### Beispiel 3

Eine weitere wässrige Trennmittelemulsion für Polyurethan-Weichschaumformkörper hat folgende Zusammensetzung:
3,5 Gew.-% UKW-Liquid (siehe Beschreibung Seite 8, Abs. 1)
4,7 Gew.-% synthetisches Kohlenwasserstoffwachs (F : 71° C)
1,2 Gew.-% Polyvinylalkohol (M = 26000, n = 530, m = 31)
2,0 Gew.-% Schaumstiabilisator DC 190 (Handelsprodukt der Fa. Dow Corning)
0,9 Gew.-% Emulgator: Emulan P = ethoxylierter Fettalkohol (Handelsprodukt der Fa. BASF)
1,5 Gew.-% Emulgator: Unitox 450 = ethoxylierter Fettalkohol (Handelsprodukt der Fa. Petrolite)
86,2 Gew.-% Wasser
M = Molekulargewicht

### Beispiel 4

Ein weiteres wässriges Trennmittel für Polyurethan-Weichschaumkörper hat folgende Zusammensetzung:
3,8 Gew.-% synthetisches Kohlenwasserstoffwachs (F: 71° C)
1,5 Gew.-% Mikrowachs (F: 70° C)
1,0 Gew.-% Polyvinylalkohol (M = 26000, n = 530, m = 31)
1,35 Gew.-% Schaumstabilisator DC 190 (Handelsprodukt der Fa. Dow Corning)
1,5 Gew.-% Emulgator: Unitox 450 = ethoxylierter Fettalkohol (Handelsprodukt dar Fa. Petrolite)
oder
1,5 Gew.-% Emulgator: Emulan P = ethoxylierter Fettalkohol (Handelsprodukt der Fa. BASF)
90,85 Gew.-% Wasser

### Beispiel 5

Ein weiteres wässriges Trennmittel für Polyurethan-Weichschaumkörper hat folgende Zusammensetzung:
4,7 Gew.-% UKW Liquid (siehe Beschreibung S. 8, Abs. 1)
3,8 Gew.-% synthetisches Kohlenwasserstoffwachs (F: 71°C)
1,5 Gew.-% Mikrowachs (F: 70° C)
1,0 Gew.-% Polyvinylalkohol (M = 26000, n = 530, m = 31)
1,35 Gew.-% Schaumstabilisator DC 190 (Handelsprodukt der Fa. Dow Corning)
1,5 Gew.-% Emulgator: Unitox 450 = ethoxylierter Fettalkohol (Handelsprodukt der Fa. Petrolite)
oder
1,5 Gew.-% Emulgator: Emulan P = ethoxylierter Fettalkohol (Handelsprodukt der Fa. BASF)
86,15 Gew.-% Wasser

## Patentansprüche

1. Wässriges Trennmittel für Polyurethan-Formkörper, insbesondere für Polyurethanschaumstoff-Formkörper, bestehend im wesentlichen aus Wasser, trennwirksamen Substanzen und Emulgatoren, dadurch gekennzeichnet, daß es die trennwirksamen Substanzen in Kombination mit einem oder mehreren ganz- oder teilverseiften Polyvinylacetaten enthält.

2. Wässriges Trennmittel nach Anspruch 1, dadurch gekennzeichnet, daß es als teilverseifte Polyvinylacetate statistische Polyvinylalkohole der allgemeinen Formel
-AABABABBBABAABABBABAABBB-
enthält, in der 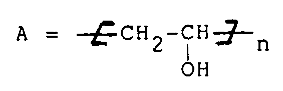 und n = 350 bis 2600
und 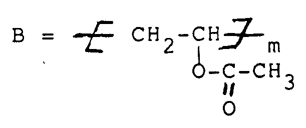 und m = 29 bis 149
bedeuten.

3. Wässriges Trennmittel nach Anspruch 1 und 2, dadurch gekennzeichnet, daß es den teilverseiften Polyvinylalkohol oder Gemische davon in einer Menge von 0,1 bis 5 Gew.-%, vozugsweise in einer Menge von 0,8 bis 3 Gew.-%, bezogen auf das Gesamtgewicht des Trennmittels enthält.

4. Wässriges Trennmittel nach Anspruch 1 bis 3, dadurch gekennzeichnet, daß man als teilverseiften Polyvinylalkohol oder Gemische davon solche einsetzt, die einen Verseifungsgrad von 71,6 bis 87,7 Mol.-% besitzen.

5. Wässriges Trennmittel nach Anspruch 1 bis 4, dadurch gekennzeichnet, daß es als trennwirksame Substanzen zumindest zum Teil einen oder mehrere ungesättigte oligomere oder polymere Kohlenwasserstoffe mit Molekulargewichten von mindestens 500, vorzugsweise von 1 000 bis 10 000, und Jodzahlen von mindestens 60, vorzugsweise von 150 bis 600, enthält.

6. Wässriges Trennmittel nach Anspruch 1 bis 5, dadurch gekennzeichnet, daß die ungesättigten Kohlenwasserstoffe Oligomere oder Polymere von Isopren und/oder Butadien sind, die gegebenenfalls noch mit anderen damit polymerisierbaren Monomeren copolymerisiert oder blockcopolymerisiert sein können und diese in einer Menge von 0,5 bis 50 Gew.-%, vorzugsweise in einer Menge von 1 bis 40 Gew.-%, bezogen auf das Gesamtgewicht des Trennmittels, vorliegen.

7. Wässriges Trennmittel nach Anspruch 1 bis 6, dadurch gekennzeichnet, daß es zusätzlich für Polyurethan-Systeme geeignete Schaumstabilisatoren in einer Menge von 0,2 bis 6 Gew.-%, vorzugsweise von 0,5 bis 3 Gew.-%, bezogen auf das Gesamtgewicht des Trennmittels, enthält.

8. Wässriges Trennmittel nach Anspruch 1 bis 7, dadurch gekennzeichnet, daß es als trennwirksame Substanz zumindest zum Teil ein für diese Zwecke übliches Siliconöl, vorzugsweise ein gegebenenfalls mit aliphatischen und/oder aromatischen Kohlenwasserstoffresten substituiertes Polydimethylsilikon enthält.

9. Wässriges Trennmittel nach Anspruch 1 bis 8, dadurch gekennzeichnet, daß es als trennwirksame Substanz zumindest zum Teil für diese Zwecke übliche Fette und/oder Öle enthält.

10. Wässriges Trennmittel nach Anspruch 1 bis 9, dadurch gekennzeichnet, daß es als trennwirksame Substanz zumindest zum Teil ein flüssiges oder festes natürliches oder synthetisches Wachs enthält.

## Claims

1. An aqueous release agent for polyurethane moldings, and more particularly for polyurethane foam moldings, comprising essentially water, release substances and emulsifiers, characterized in that it contains the release substance in combination with one or more partly or completely saponified polyvinyl acetates.

2. The aqueous release agent as claimed in claim 1, characterized in that as partly saponified polyvinyl acetates it contains statistical polyvinyl alcohols with the general formula
-AABABABBBABAABABBABAABBB-
wherein 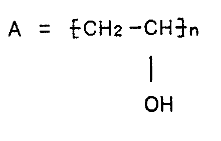 with n equaling 350 to 2600
and 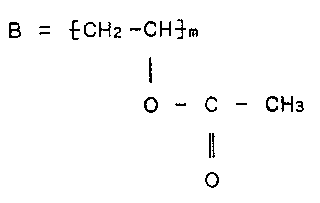 with m equaling 29 to 149

3. The aqueous release agent as claimed in claim 1 or in claim 2, characterized in that it contains the partly saponified polyvinyl alcohol or mixtures thereof in a quantity of 0.1 to 5%, and preferably 0.8 to 4%, of the overall weight of the release agent.

4. The aqueous release agent as claimed in any one of the preceding claims 1 through 3, characterized by the use of such partly saponified polyvinyl or a mixture thereof in the form of one with a degree of saponification of 71.6 to 87.7 mole %.

5. The aqueous release agent as claimed in any one of the preceding claims 1 through 4, characterized in that as the release substances it contains at least partly one or more unsaturated oligomeric or polymeric hydrocarbons, having a molecular weight of at least 500 and preferably 1,000 to 10,000 and an iodine number of at least 60 and preferably 150 to 600.

6. The aqueous release agent as claimed in any one of the preceding claims 1 through 5, characterized in that the unsaturated hydrocarbons are oligomers or polymers of isoprene and/or butadiene, which may optionally be copolymerized or block copolymerized with other monomers, which are able to be polymerized therewith, and it contains the same in a quantity of 0.5 to 50%, and more particularly in a quantity of 1 to 40%, of the overall weight of the release agent.

7. The aqueous release agent as claimed in any one of the preceding claims 1 through 6, characterized in that it additionally contains foam stabilizers, which are suitable for polyurethane systems, in a quantity of 0.2 to 6% and preferably 0.5 to 3%, of the overall weight of the release agent.

8. The aqueous release agent as claimed in any one of the preceding claims 1 through 7, characterized in that as a release substance it contains at least in part a silicone oil, which is conventional for this purpose, and preferably one in the form of a polydimethylsilicone optionally substituted with aliphatic and/or aromatic hydrocarbon radicals.

9. The aqueous release agent as claimed in any one of the preceding claims 1 through 8, characterized in that it contains as such release substance at least in part fats and/or oils which are conventional for this purpose.

10. The aqueous release agent as claimed in any one of the preceding claims 1 through 9, characterized in that it contain as such release substance at least in part a liquid or solid natural or synthetic wax.

## Revendications

1. Agent de démoulage aqueux pour corps moulés en polyuréthanne, notamment pour corps moulés en mousse de polyuréthanne constitué essentiellement d'eau, de substances démoulantes et d'émulsionnants, caractérisé en ce qu'il contient les substances démoulantes en combinaison avec un ou plusieurs polyacétates de vinyle saponifié totalement ou partiellement.

2. Agent de démoulage aqueux selon la revendication 1, caractérisé en ce qu'il contient comme polyacétate de vinyle partiellement saponifiés des polyalcool vinylique statistiques de formules générales :
-AABABABBBABAABBABAABBB-
dans laquelle : 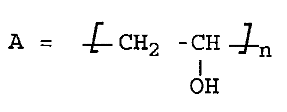 et n = 350 à 2 600
et 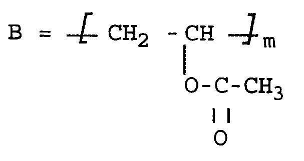 et n = 290 à 149

3. Agent de démoulage aqueux selon la revendication 1 et 2, caractérisé en ce qu'il contient du polyalcool vinylique partiellement saponifié ou des mélanges en une quantité de 0,1 à 5 % en poids de préférence en une quantité de 0,8 à 3 % en poids, par rapport au poids total de l'agent de démoulage.

4. Agent de démoulage aqueux selon les revendications 1 à 3, caractérisé en ce qu'on utilise comme polyalcool vinylique partiellement saponifié ou des mélanges de ces polymères, ceux qui possèdent un taux de saponification de 71,6 à 87,7 % molaire.

5. Agent de démoulage aqueux selon les revendications 1 à 4, caractérisé en ce qu'il contient comme substances actives de démoulage au moins en partie un ou plusieurs hydrocarbures polymères ou oligomères insaturés ayant des poids moléculaires d'au moins 500, de préférence de 1 000 à 10 000, et des indices d'iode d'au moins 60, de préférence de 150 à 600.

6. Agent de démoulage aqueux selon les revendications 1 à 5, caractérisé en ce que les hydrocarbures insaturés sont des oligomères ou des polymères d'isoprène et/ou de butadiène, qu'on peut copolymériser le cas échéant avec d'autres monomères polymérisables avec eux ou qu'on peut copolymériser séquentiellement et ceux-ci se présentent en une quantité de 0,5 à 50 % en poids, de préférence en une quantité de 1 à 40 % en poids, par rapport au poids total de l'agent de démoulage.

7. Agent de démoulage aqueux selon les revendications 1 à 6, caractérisé en ce qu'il contient en plus pour les systèmes de polyuréthanne des anti-mousses appropriés en une quantité de 0,2 à 6 % en poids, de préférence de 0,5 à 3 % en poids par rapport au poids total d'agent de démoulage.

8. Agent de démoulage aqueux selon les revendications 1 à 7, caractérisé en ce qu'il contient comme substance active de démoulage, au moins pour une partie, de l'huile de silicone usuelle dans ce but, de préférence un polydiméthylsilicone substitué par des radicaux hydrocarbures aliphatiques et/ou aromatiques.

9. Agent de démoulage aqueux selon les revendications 1 à 8, caractérisé en ce qu'il contient comme substance active de démoulage au moins une partie des graisses et/ou huiles usuelles dans ce but.

10. Agent de démoulage aqueux selon les revendications 1 à 9, caractérisé en ce qu'il contient comme substance active de démoulage une cire naturelle ou synthétique, liquide ou solide.
